# EUROPÄISCHE PATENTSCHRIFT

(11) **EP 2 888 564 B1**
(45) Veröffentlichungstag und Bekanntmachung des Hinweises auf die Patenterteilung: **29.04.2020**
(21) Anmeldenummer: 13765638.5
(22) Anmeldetag: 22.08.2013
(51) Int. Cl.: G01G 23/01, G01G 17/06, G01G 13/285

(54) **VORRICHTUNG UND VERFAHREN ZUM BETREIBEN EINER WÄGE- UND FÜLLVORRICHTUNG**
DEVICE AND METHOD FOR OPERATING A WEIGHING AND FILLING DEVICE
DISPOSITIF ET PROCÉDÉ SERVANT À FAIRE FONCTIONNER UN DISPOSITIF DE PESÉE ET DE REMPLISSAGE

(30) Priorität: 24.08.2012 DE 102012016653
(43) Veröffentlichungstag der Anmeldung: 01.07.2015
(73) Patentinhaber: Haver & Boecker OHG, 59302 Oelde (DE)
(72) Erfinder: DELATOUR, Vincent, 33332 Gütersloh (DE); KASPER, Thomas, 59302 Oelde (DE); KETTERLE, Peer, 59071 Hamm (DE); SCHIMMELPFENNIG, Thomas, 59320 Ennigerloh (DE)
(74) Vertreter: BSB Patentanwälte Schütte & Engelen Partnerschaft mbB
(86) Internationale Anmeldenummer: PCT/EP2013/002542
(87) Internationale Veröffentlichungsnummer: WO 2014/029504

(56) Entgegenhaltungen:
- WO-A2-02/12840
- DE-A1-102006 050 638

## Beschreibung

Die vorliegende Erfindung betrifft eine Füllmaschine und ein Verfahren zum Betreiben einer solchen Füllmaschine. Insbesondere umfasst eine solche Füllmaschine eine Wägeeinrichtung oder ist als eine solche ausgeführt, um beispielsweise bei dem Einsatz in Füllmaschinen kalibrierte und insbesondere geeichte bzw. eichfähige bzw. von unabhängiger Stelle überprüfte Wägemodule zur Verfügung zu stellen. Dadurch wird die häufig geforderte Abfüllung von Produkten in Behälter mit geeichten Waagen ermöglicht. Beispielsweise werden Schüttgüter in Säcke abgefüllt, wobei die dazu verwendeten Waagen geeicht sind. Es werden aber auch pastöse oder flüssige Produkte in entsprechende Behältnisse unter Verwendung geeichter Waagen abgefüllt.

Bei allen diesen Einsatzzwecken wird die Anlage wie z. B. eine Füllanlage zunächst aufgebaut und anschließend kalibriert. Gegebenenfalls kommt ein staatlicher Eichbeamter und führt eine Eichung der Waage einer solchen Füllmaschine durch. Zur Kalibrierung und/oder Eichung kann ein entsprechender Schalter vorgesehen sein, der umgelegt wird, um die Waage und/oder die Füllmaschine entsprechend zu kalibrieren oder zu eichen. Nach erfolgter Eichung wird ein solcher Schalter versiegelt, sodass nur nach Brechen des Siegels eine erneute Kalibrierung und/oder Eichung möglich ist.

Systematisch falsche Wiegeergebnisse werden so zuverlässig vermieden. Füllmaschinen und sonstige Vorrichtungen, die derart kalibriert bzw. geeicht werden funktionieren zuverlässig. Zu Wartungszwecken oder bei Störungen kann es aber erforderlich werden, ein defektes Teil zu suchen, was zu einer Verletzung eines Eichsiegels führen kann. Dazu werden möglicherweise defekte Komponenten getauscht, um die Funktion mit einem anderen Bauteil zu überprüfen. Dabei kann es auch sinnvoll sein, die Wägeeinrichtung auszutauschen, um einen Defekt daran zu überprüfen oder aber einzelne Teile auf einen Defekt zu testen. Wird nun beispielsweise die Wägeeinheit einer solchen Füllmaschine ausgetauscht, verweigert die zugehörige Steuerung die Funktion, da Bestandteile verwendet werden, die bei der Eichung nicht vorhanden waren.

Dadurch wird auch bei einem nur kurzfristigen Tausch und anschließendem Rücktausch einzelner Komponenten eine neue Eichung erforderlich, wozu der Eichbeamte extra zu der Anlage kommen muss. Das kostet Zeit und Geld.

Die DE 10 2006 050 638 A1 ist ein Verfahren zur Übertragung und Anzeige von eichpflichtigen Daten bekannt geworden, bei dem eichpflichtige Daten in Form von Datensätzen von einer Datenquelle an eine Anzeigeeinheit verschlüsselt übertragen und von einer manipulationssicheren Software-Applikation entschlüsselt und in einer manipulationssicheren Form dargestellt werden.

Aus der WO 02/12840 A2 ist eine Vorrichtung und ein Verfahren mit den Merkmalen des Oberbegriffs von Anspruch 1 bekannt.

Nachteilig an den aus diesen beiden Druckschriften bekannten Systemen ist, dass bei einer Wartung oder bei einem Defekt einer Komponente des Systems eine Komponente gegen eine andere nicht ohne Weiteres ausgetauscht werden kann, um zum Beispiel Funktionstests durchzuführen.

Es ist deshalb die Aufgabe der vorliegenden Erfindung, eine Vorrichtung und ein Verfahren zum Betreiben einer Vorrichtung zur Verfügung zu stellen, wobei einzelne Komponenten ohne z. B. ein Eichsiegel brechen zu müssen, zu Testzwecken getauscht werden können.

Diese Aufgabe wird gelöst durch ein Verfahren mit den Merkmalen des Anspruchs 1 und durch eine Vorrichtung mit den Merkmalen des Anspruchs 12. Bevorzugte Weiterbildungen der Erfindungen sind Gegenstand der Unteransprüche. Weitere Vorteile und Merkmale ergeben sich aus dem Ausführungsbeispiel.

Das erfindungsgemäße Verfahren dient zum Betreiben einer Füllmaschine, welche wenigstens mit einer Speichereinrichtung, einer Auswerteeinrichtung und einer Wägeeinheit ausgerüstet ist. Möglich ist es aber auch, dass die Vorrichtung jeweils eine Mehrzahl oder Vielzahl solcher Komponenten enthält oder auch z. B. Anzeigenkomponenten besitzt.

Wenigstens die Wägeeinheit weist einen eindeutigen Identifikationsschlüssel auf. Für den Identifikationsschlüssel der Wägeeinheit ist ein zugehöriger charakteristischer Kennschlüssel in der Speichereinrichtung hinterlegt. Ein solcher Kennschlüssel wird insbesondere bei einer vorhergehenden Kalibrierung oder Eichung in der Speichereinrichtung hinterlegt.

Die Auswerteeinrichtung leitet aus den mit der Wägeeinheit ermittelten Messdaten einen Datensatz ab, welcher Wägedaten enthält.

Die Auswerteeinrichtung stellt z. B. über eine Vergleichseinrichtung die Zusammengehörigkeit des in der Speichereinrichtung hinterlegten Kennschlüssels der Wägeeinheit und des Identifikationsschlüssels der aktuellen Wägeeinheit fest. Die Auswerteeinrichtung ermittelt einen positiven Prüfstatus, wenn die Zusammengehörigkeit des in der Speichereinrichtung hinterlegten Kennschlüssels und des Identifikationsschlüssels der aktuellen Wägeeinheit festgestellt wird. Die Auswerteeinrichtung ermittelt einen negativen Prüfstatus fest, wenn zu dem Identifikationsschlüssel der aktuellen Wägeeinheit kein passender Kennschlüssel in der Speichereinrichtung festgestellt wird.

Der Datensatz wird als kalibrierter Datensatz bei positivem Prüfstatus und als nicht-kalibrierter Datensatz bei negativem Prüfstatus ausgegeben. Mit den ausgegebenen Wägedaten wird die Füllmaschine gesteuert. Nach erstmaligem Erkennen eines negativen Prüfstatus wird die Steuerung nur für einen vorbestimmten Zeitraum fortgesetzt. Die Funktion kann aber fortgesetzt werden, auch wenn ein negativer Prüfstatus ermittelt wird.

Das bietet viele Vorteile. Ein erheblicher Vorteil ist, dass eine aufwendige Rekalibrierung und/oder Eichung nicht erforderlich ist, auch wenn eine der ursprünglich geeichten Komponenten für Test- oder Wartungszwecke getauscht wurde. Dadurch kann grundsätzlich jede an dem Prozess verwendete Komponente für Test- oder Wartungszwecke getauscht werden, ohne dass nach erfolgreichem Zurücktausch auf die Ursprungskomponente eine erneute Kalibrierung und/oder Eichung erforderlich ist.

Beispielsweise kann in dem Verbindungsstecker der Wägeeinheit eine Kontrolleinheit vorgesehen sein, die einen eindeutigen und nicht-veränderbaren Identifikationsschlüssel enthält. Auf externe Abfrage kann z. B. der Identifikationsschlüssel der aktuell angeschlossenen Wägeeinheit ausgegeben werde, sodass andere Komponenten wie z. B. die Auswerteeinrichtung Informationen über den Identifikationsschlüssel erhalten. Möglich ist es auch, dass die Kontrolleinheit bzw. die Wägeeinheit Informationen über den Identifikationsschlüssel in verschlüsselter Form oder dergleichen zurückgeben. Beispielsweise kann eine Anfrage mit dem Identifikationsschlüssel signiert zurückgegeben werden. Oder es wird ein Hash, eine Prüfzahl oder dergleichen zurückgegeben. Jedenfalls wird ein eindeutig prüfbares Signal zurückgegeben.

Die Auswerteeinrichtung kann den Identifikationsschlüssel mit dem in der Speichereinrichtung hinterlegten Kennschlüssel vergleichen. Falls bei der Überprüfung des Identifikationsschlüssels der Wägeeinheit ein mit dem Identifikationsschlüssel generierter Kennwert zurückgegeben wird, so wird dieser Kennwert mit einem dementsprechend behandelten Kennwert verglichen, der sich durch eine Behandlung mit dem aus der Speichereinrichtung enthaltenen Kennschlüssel ergibt. Entsprechen sich Identifikationsschlüssel und Kennschlüssel nicht bzw. gehören die beiden Schlüssel nicht zu der gleichen Komponente, so wurde die betreffende Komponente getauscht und die Kalibrierung bzw. Eichung ist nicht oder jedenfalls vorübergehend nicht mehr gültig.

Das kommt z. B. vor, wenn die ursprünglich angeschlossene Wägeeinheit zu Prüf- oder Wartungszwecken abgesteckt wurde. Kalibrierte und/oder geeichte Verhältnisse liegen dann nicht mehr vor, aber um die Funktion der Vorrichtung oder Anlage insgesamt zu überprüfen oder normale Reparaturen vorzunehmen, kann die Vorrichtung weiter betrieben werden. Eine aufwendige Neukalibrierung muss nicht erfolgen, sondern es genügt, die kalibrierte Wägeeinheit wieder anzustecken. Vorzugsweise wird wenigstens bei jedem Start der Vorrichtung überprüft, ob die bei der Kalibrierung vorhandene Wägeeinheit vorhanden ist. Falls ja, kann die Vorrichtung normal betrieben werden und es können z. B. Behälter gefüllt werden. Andernfalls wird wenigstens ein Wartungsbetrieb ermöglicht.

Es ist möglich, dass ein mit der Auswerteeinrichtung abgeleiteter Datensatz mit einem positiven Prüfstatus versehen wird, wenn die Zusammengehörigkeit des in der Speichereinrichtung hinterlegten Kennschlüssels und des Identifikationsschlüssels der aktuellen Wägeeinheit ermittelbar ist, und dass ein mit der Auswerteeinrichtung abgeleiteter Datensatz mit einem negativen Prüfstatus versehen wird, wenn eine fehlende Zusammengehörigkeit des in der Speichereinrichtung hinterlegten Kennschlüssels und des Identifikationsschlüssels der aktuellen Wägeeinheit ermittelbar ist.

Es ist aber auch möglich und bevorzugt, dass in Abhängigkeit von einem Prüfergebnis oder dem Prüfstatus der Datensatz in unterschiedlichen Speichereinrichtungen abgelegt oder auf unterschiedlichen Anzeigeeinrichtungen zur Ausgabe gebracht wird, ohne den Datensatz mit dem Prüfstatus zu versehen.

Möglich ist es auch, dass zwei, drei oder mehr Wägeeinheiten vorgesehen sind, die jeweils über einen eigenen Identifikationsschlüssel (und gegebenenfalls einen Kennschlüssel) verfügen. Die Auswerteeinrichtung überprüft dann anhand der in der Speichereinrichtung hinterlegten Kennschlüssel die Gültigkeit der Identifikationsschlüssel der beim Wägeprozess aktuell verwendeten Wägeeinheiten. Möglich ist es auch, dass die Identifikationsschlüssel aller aktuell angeschlossenen Wägeeinheiten überprüft werden. Wenn sich auch nur ein negativer Prüfstatus ergibt, wird der Betrieb auf einen unkalibrierten und/oder ungeeichten Betrieb umgestellt.

Es ist auch möglich, dass bei einem Kalibrier- und/oder Eichvorgang wenigstens eine zusätzliche Wägeeinheit mehr mit kalibriert und/oder geeicht wird als im normalen Betrieb nötig. Dadurch kann die zusätzliche Wägeeinheit als Ersatz bereitgehalten werden. Wenn die tatsächlich verwendete Wägeeinheit wegen eines Defektes ausgetauscht werden muss, kann nach Anschluss der zusätzlichen Wägeeinheit der kalibrierte und/oder geeichte Betrieb weitergehen.

In allen Ausgestaltungen sind vorzugsweise mehrere Komponenten vorgesehen, von denen wenigstens eine als Wägeeinheit ausgeführt ist. Die Speichereinrichtung und die Auswerteeinheit können auch Komponenten sein, denen ein eindeutiger Identifikationsschlüssel zugeordnet ist bzw. die einen eindeutigen Identifikationsschlüssel enthalten. Die tatsächlichen Programmbefehle können in einem Programmpaket enthalten sein, dem wiederum auch ein eindeutiger Identifikationsschlüssel zugeordnet ist.

Die Kennschlüssel werden vorteilhafterweise in einem schreibgeschützten Bereich der Speichereinrichtung abgelegt, sodass im Normalbetrieb nur ein lesender bzw. auswertender Zugriff möglich ist. Dieser Speicherbereich ist vorzugsweise nur im Kalibrier- oder Eichmodus beschreibbar.

Eine Wägeeinheit kann aus mehreren Teilen bestehen. Beispielsweise kann die Wägeeinheit eine oder mehrere Wägezellen aufweisen. Wenigstens ein Messaufnehmer ist vorgesehen. Vorzugsweise weist die Wägeeinheit einen Stecker auf. Der Wägeeinheit insgesamt kann wenigstens ein integrierter Schaltkreis zugeordnet sein, der zur Speicherung des Identifikationsschlüssels oder Generierung eines Kennwertes oder dergleichen dient.

Vorzugsweise sind wenigstens ein Kalibriermodus und insbesondere ein Eichmodus vorgesehen. Nach Aktivierung eines solchen Modus wird der charakteristische Kennschlüssel der dann aktuell angeschlossenen Wägeeinheit zusammen mit den Kalibrierungsdaten in der Speichereinrichtung nicht-flüchtig und insbesondere schreibgeschützt gespeichert. Vorzugsweise wird nicht nur der Kennschlüssel der Wägeeinheit gespeichert, sondern es werden die Kennschlüssel aller aktiven und/oder beteiligten Komponenten gespeichert. Dadurch wird eine Manipulation im Normalbetrieb verhindert. Gleichzeitig ist aber ein Wartungsbetrieb möglich. Nach der Kalibrierung wird später der in der Speichereinrichtung hinterlegte Kennschlüssel mit dem Identifikationsschlüssel der dann aktuell angeschlossenen Wägeeinheit verglichen.

Vorteilhafterweise wird der Kalibriermodus durch einen Schalter aktiviert, der nach der Kalibrierung und/oder Eichung mit einer Schutzeinrichtung versehen wird, sodass eine erneute Kalibrierung nur nach Verletzung der Schutzeinrichtung möglich ist. Auch eine Sicherung über ein Siegel oder eine Plombe ist möglich.

In bestimmten Ausgestaltungen kann eine Kalibrierung nur nach Authentifizierung durchgeführt werden. Eine solche kann z. B. über Anschluss einer Kalibrierkomponente realisiert werden , deren Kennschlüssel bei der Kalibrierung überprüft wird. Dadurch kann die Durchführung der Kalibrierung auf Personen beschränkt werden, die die nötige Befähigung und Berechtigung haben. Auch der Zugang über einen Code oder dergleichen ist möglich.

In allen Ausgestaltungen können die Identifikationsschlüssel und die Kennschlüssel identisch oder symmetrisch aufgebaut sein. Möglich und bevorzugt sind auch Verfahren, bei denen die Identifikationsschlüssel und die Kennschlüssel asymmetrisch als öffentliche und private Schlüssel ausgebildet sind. Die Kennschlüssel können dann z. B. als öffentliche Schlüssel vorgesehen sein, die frei zugänglich sein können. Ein bestimmter Leseschutz muss bei öffentlichen Schlüsseln nicht gegeben sein.

Vorzugsweise wird der Datensatz mit einem oder dem zugehörigen Kennschlüssel signiert, falls ein positiver Prüfstatus ermittelt wird. Ein positiver Prüfstatus wird insbesondere nur vergeben, wenn sich die Zusammengehörigkeit der jeweiligen Kennschlüssel und der jeweiligen Identifikationsschlüssel aller Komponenten ergibt.

In bevorzugten Ausgestaltungen wird der Datensatz zu einer als Anzeigeeinrichtung ausgebildeten Komponente übermittelt. Der Datensatz wird nur dann auf der Anzeigeeinrichtung als kalibrierter Datensatz ausgegeben, wenn ein in der Speichereinrichtung hinterlegter Kennschlüssel der Anzeigeeinrichtung zu einem Identifikationsschlüssel der aktuell angeschlossenen bzw. vorhandenen Anzeigeeinrichtung passt.

Insbesondere ist ein Steuerprogramm oder Programmpaket vorgesehen, welches wenigstens einen Teil des Ablaufes steuert und welches ebenfalls einen eigenen Identifikationsschlüssel aufweist. Ein zu dem Identifikationsschlüssel zugehöriger Kennschlüssel wird bei der Kalibrierung in der Speichereinrichtung abgelegt. Insbesondere ist die Vorrichtung als selbsttätige Waage ausgeführt oder umfasst eine solche. Bei dem Einsatz in Füllmaschinen gibt eine solche selbsttätige Waage den Befehl zum Beenden des Füllens vor.

Vorzugsweise wird ein Hinweissignal ausgegeben, wenn ein negativer Prüfstatus ermittelt wird, wobei insbesondere erst nach Bestätigung des Hinweissignals die Steuerung fortgesetzt wird.

In bevorzugten Ausgestaltungen wird nach erstmaligem Erkennen eines negativen Prüfstatus die Steuerung nur für einen vorbestimmten Zeitraum fortgesetzt. Der Zeitraum kann z. B. mehrere Tage betragen. Möglich ist auch ein Zeitraum von mehreren Stunden. Je nach Anforderungen kann der Zeitraum auch auf weniger als 1 Stunde begrenzt werden. Am Ende des Zeitraums kann ein Weiterbetrieb gestoppt werden. Es ist auch möglich, dass ein erneuter zeitbegrenzter Betrieb nach Quittierung einer Meldung möglich ist. Ein solcher Wartungsbetrieb kann auf eine bestimmte Anzahl von Quittierungen begrenzt sein.

In dem Kalibriermodus wird der Kennschlüssel der Wägeeinheit in der Speichereinrichtung zusammen mit den Kalibrierdaten abgelegt. Eine solche Kalibrierung kann in einem zusätzlichen Eichmodus bestätigt werden, sodass erst nach der Eichung eine Änderung der Kalibrierdaten nicht mehr möglich ist, ohne neu zu eichen.

Insbesondere werden bei der Kalibrierung der Vorrichtung die Kennschlüssel der beteiligten Komponenten in der Speichereinrichtung abgelegt. Bei der Eichung werden die Schlüssel überprüft und es wird der entsprechende Speicherinhalt vor Änderungen geschützt.

Falls mehrere Komponenten jeweils einen eindeutigen Identifikationsschlüssel aufweisen, wird für jeden Identifikationsschlüssel jeder Komponente jeweils ein zugehöriger charakteristischer Kennschlüssel in der Speichereinrichtung hinterlegt. Dann wird beim Start der Vorrichtung und/oder bei jedem Wägevorgang und/oder in regelmäßigen Abständen die Gültigkeit aller beteiligter Schlüssel überprüft.

Ein Datensatz wird nur dann mit einem positiven Prüfstatus versehen, wenn die Zusammengehörigkeit der jeweiligen Kennschlüssel und der jeweiligen Identifikationsschlüssel aller Komponenten festgestellt wird.

Ein Wägevorgang insgesamt wird nur dann mit einem positiven Prüfstatus versehen, wenn kein einziger Wägevorgang mit einem negativen Prüfstatus versehen wurde.

Bevorzugt wird der Betrieb schon bei Ermittlung auch nur eines einzigen negativen Prüfstatus erst nach Quittierung einer Meldung möglich.

In allen Fällen sind die Identifikationsschlüssel und/oder die Kennschlüssel vorzugsweise unveränderbar und insbesondere eindeutig.

Auch eine zur Anzeige eingesetzte Anzeigeeinrichtung kann mit einem unveränderbaren eindeutigen Identifikationsschlüssel versehen sein.

Vorzugsweise wird mit dem Verfahren eine Füllmaschine wenigstens teilweise gesteuert. Vorzugsweise werden die ausgegebenen Wägedaten zur Steuerung der Füllmaschine verwendet.

Eine erfindungsgemäße Füllmaschine weist wenigstens eine Auswerteeinrichtung und wenigstens eine Wägeeinheit und wenigstens eine Speichereinrichtung auf. Wenigstens die Wägeeinheit weist einen eindeutigen Identifikationsschlüssel auf. In der Speichereinrichtung ist wenigstens ein Kennschlüssel hinterlegt, welcher für den Identifikationsschlüssel der Wägeeinheit charakteristisch ist. Die Auswerteeinrichtung ist dazu geeignet, bei einem Wägevorgang aus den mit der Wägeeinheit ermittelten Messdaten wenigstens einen Datensatz abzuleiten, welcher wenigstens auch Wägedaten enthält. Die Auswerteeinrichtung ist dazu ausgebildet und eingerichtet, die Zusammengehörigkeit des in der Speichereinrichtung hinterlegten Kennschlüssels der Wägeeinheit und des Identifikationsschlüssels der aktuellen und insbesondere aktuell angeschlossenen Wägeeinheit zu überprüfen und einen positiven Prüfstatus zu ermitteln , wenn die Zusammengehörigkeit des Kennschlüssels und des Identifikationsschlüssels der aktuellen Wägeeinheit feststellbar ist und einen negativen Prüfstatus zu ermitteln , wenn eine fehlende Zusammengehörigkeit oder keine Zusammengehörigkeit des Kennschlüssels und des zugehörigen Identifikationsschlüssels der aktuellen Wägeeinheit feststellbar ist. Der Datensatz ist als kalibrierter Datensatz bei positivem und als nicht-kalibrierter Datensatz bei negativem Prüfstatus ausgebbar. Mit den ausgegebenen Wägedaten ist die Füllmaschine steuerbar. Nach erstmaligem Erkennen eines negativen Prüfstatus ist die Steuerung nur für einen vorbestimmten Zeitraum fortsetzbar.

Die in der Speichereinrichtung hinterlegten Kennschlüssel verschiedener Komponenten werden zunächst bei einer ursprünglichen Kalibrierung dort abgelegt. Im Betrieb wird später überprüft, ob die in der Speichereinrichtung hinterlegten Kennschlüssel zu den ursprünglich angeschlossenen oder verwendeten Komponenten passen oder ob eine oder mehrere der Komponenten getauscht wurden. Falls zu einem Identifikationsschlüssel einer aktuellen Komponente kein zugehöriger Kennschlüssel in der Speichereinrichtung hinterlegt ist, wurde diese Komponente nach der letzten Kalibrierung und/oder Eichung getauscht. Die aktuell angeschlossene Komponente stimmt dann nicht mit der Komponente überein, die bei der letzten Kalibrierung und/oder Eichung vorhanden war.

Vorzugsweise ist ein mit einer Sicherungseinrichtung versehener Schalter vorgesehen, mit welcher die Auswerteeinrichtung in einen Kalibriermodus und/oder in einen Eichmodus überführbar ist.

In allen Ausgestaltungen ist vorzugsweise wenigstens ein Füllorgan vorgesehen, welches zur nacheinander erfolgenden Abfüllung von Produkten in Behälter dient. Dabei erfolgt vorzugsweise eine kalibrierte Abfüllung nur bei positivem Prüfstatus.

Die Vorrichtung ist als Füllmaschine ausgeführt und dient vorzugsweise zur nacheinander erfolgenden kalibrierten Abfüllung von Produkten in Behälter. Die normale Abfüllung erfolgt dabei in einem Füllmodus. Ein Füllorgan dient zum Transport des abzufüllenden Produktes in den Behälter. Wenigstens eine Wägeeinheit ist zum Abwiegen des Produktes vorgesehen. Eine Auswerteeinrichtung und ein in einer Speichereinrichtung abgelegtes Programmpaket sind vorgesehen. Wenigstens der Wägeeinheit, der Auswerteeinrichtung und dem Programmpaket als Komponenten sind eindeutige Identifikationsschlüssel zugeordnet, wobei zu den Identifikationsschlüsseln korrespondierende Kennschlüssel in der Speichereinrichtung abgelegt sind. Wenigstens bei Start der Vorrichtung und/oder des Füllmodus werden die Identifikationsschlüssel der aktuellen Wägeeinheit, der aktuellen Auswerteeinrichtung und des aktuellen Programmpaketes abgefragt. Es wird jeweils überprüft, ob die in der Speichereinrichtung abgelegten Kennschlüssel mit den Identifikationsschlüsseln der aktuellen Komponenten korrespondieren. Bei positivem Prüfstatus wird der Füllmodus fortgesetzt und bei einem negativen Prüfstatus wird insbesondere ein Wartungsmodus gestartet, in dem eine nicht-kalibrierte Abfüllung für Wartungszwecke möglich ist.

In allen Ausgestaltungen können mehrere Wägeeinheiten an einer Auswerteeinrichtung vorgesehen sein, die nacheinander oder gleichzeitig ausgewertet werden.

Die Identifikation kann hardwaretechnisch oder über Software erfolgen. Insbesondere ist es auch möglich, dass einzelne Überprüfungen durch Hardware und andere durch Software durchgeführt werden.

Beispielsweise kann eine Anzeigeeinrichtung ein vollständiger und gegebenenfalls handelsüblicher Computer mit angeschlossenem Bildschirm sein, der über ein privates oder öffentliches Netz mit der Auswerteeinrichtung verbunden ist. Der Identifikationsschlüssel kann dann dem Computer zugeordnet werden, sodass bei Austausch des Computers eine erneute Kalibrierung und/oder Eichung nötig wird. Möglich und bevorzugt ist es aber, dass der Identifikationsschlüssel nicht der Hardware, also dem Computer, sondern der Software, also dem Programm wie z. B. dem Anzeigeprogramm zugeordnet ist. Der Identifikationsschlüssel kann dann eindeutig für die Softwareversion sein. Erst bei Wechsel zu einer anderen Version würde eine neue Kalibrierung und/oder Eichung erforderlich. Bei einer solchen Zuordnung des Identifikationsschlüssels zu einer Softwareversion erfolgt vorzugsweise eine Überprüfung des Programms über Software über ein geeignetes Verfahren, welches z. B. Prüfziffern über den Programmcode oder ähnliches umfasst. Die Anzeigeeinrichtung ist dann nicht hardwaretechnisch signiert, sondern grundsätzlich kann jeder geeignete Computer eingesetzt werden, auf dem das Programmpaket läuft. Das ermöglicht einen leichteren Tausch bei Hardwaredefekten an dem Computer.

Die Auswerteeinrichtung kann in allen Fällen die Speichereinrichtung umfassen.

Die Wägeeinheit und/oder die Auswerteeinrichtung weisen vorzugsweise einen in der Hardware vorgesehenen Identifikationsschlüssel auf.

In allen Ausgestaltungen ist auch eine Überkreuzüberprüfung möglich, indem z. B. auch in der Wägeeinheit der Kennschlüssel der Auswerteeinrichtung gespeichert wird. Bei Start oder bei einer Überprüfung kann dann auch die Zuordnung der Auswerteeinrichtung zu der Wägeeinheit überprüft werden. Möglich ist es auch, dass zwei, drei oder mehr Komponenten jeweils einen Speicher aufweisen, in welchen jeweils die Kennschlüssel der anderen Komponenten abgespeichert sind. Weitere Vorteile der vorliegenden Erfindung ergeben sich aus dem Ausführungsbeispiel, welches im Folgenden mit Bezug auf die beiliegenden Figuren erläutert wird.

In den Figuren zeigen:
- Fig. 1: eine schematische Draufsicht auf eine Füllmaschine; und
- Fig. 2: eine schematische Darstellung der erfindungsgemäßen Vorrichtung.

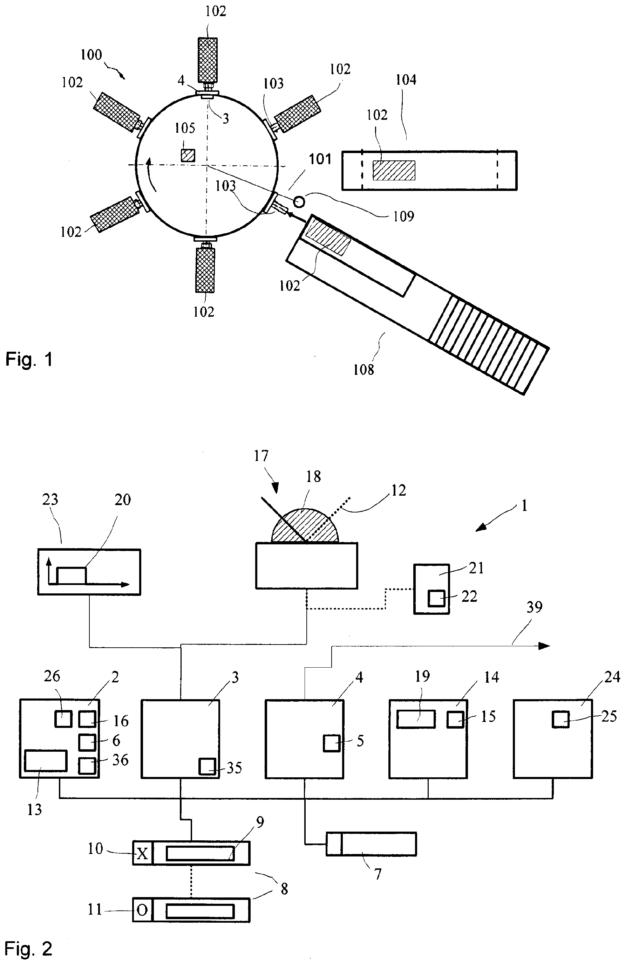

Fig. 1 zeigt eine stark schematisierte Draufsicht auf eine Füllmaschine 100 als Vorrichtung 1. Die Füllmaschine 100 ist zur Füllung von Produkten in Behälter 102 vorgesehen. Hier ist die Füllmaschine 100 zur Abfüllung von Schüttgütern in Säcke vorgesehen.

Die Füllmaschine 100 ist hier um eine zentrale Achse kontinuierlich rotierend ausgeführt und umfasst hier sechs über dem Umfang verteilt angeordnete Füllorgane 103, denen Behälter 102 zur Füllung zugeordnet werden. Hier werden die als Ventilsäcke ausgeführten Behälter 102 mit dem Sackventil auf die Füllorgane 103 aufgesteckt. Zum automatischen Aufstecken ist eine Aufsteckvorrichtung 108 vorgesehen.

Ein Füllorgan 103 befindet sich in der Darstellung nach Fig. 1 in der Aufsteckposition. Der Winkelsensor 109 hatte zuvor das Vorbeirotieren des Füllorgans 103 in der vorbestimmten Winkelposition 101 erfasst und damit den nächsten Aufsteckvorgang ausgelöst. Die Aufsteckvorrichtung 108 kann z. B. über ein Leersackmagazin und eine Aufsteckeinrichtung verfügen. Der Füllvorgang wird über eine Steuereinrichtung 105 gesteuert. Jedem Füllorgan 103 sind hier eine Wägeeinheit 4 und eine Auswerteeinheit 3 zugeordnet. Der Füllvorgang wird gewichtsgesteuert, sodass die Behälter 102 am Ende des Füllvorganges ein definiertes und reproduzierbares Gewicht aufweisen.

Nach dem Füllvorgang werden die Behälter 102 abgenommen und mit einem Austrageband 104 abtransportiert. An dem Austrageband 104 können Kontrolleinrichtungen vorgesehen sein.

Fig. 2 zeigt eine stark schematische Darstellung einer erfindungsgemäßen Vorrichtung 1, die als separate Einrichtung oder aber auch als Füllmaschine 100 ausgeführt sein kann.

Die Vorrichtung 1 nach Fig. 2 wird insbesondere bei der Abfüllung von Produkten eingesetzt. Über eine kalibrierte und insbesondere geeichte Waage wird ein reproduzierbares und genau eingehaltenes Gewicht abgewogen und abgefüllt.

Hier weist die Vorrichtung 1 eine Speichereinrichtung 2, eine Auswerteeinrichtung 3, eine Wägeeinheit 4 und eine Anzeigeeinrichtung 14 auf. Die Wägeeinheit 4 ist hier insbesondere als eine selbsttätige Wägeeinheit ausgeführt oder umfasst eine solche. Hier gibt die Wägeeinheit 4 bei Erreichen des abzufüllenden Gewichts oder kurz davor einen Steuerbefehl 39 aus, woraufhin der Füllvorgang beendet wird.

Der Wägeeinheit 4 ist ein eindeutiger Identifikationsschlüssel 5 zugeordnet. Hier weisen auch die anderen Komponenten, nämlich die Auswerteeinrichtung 3, die Anzeigeeinrichtung 14 und das Steuerprogramm 24 jeweils eindeutig zugeordnete Identifikationsschlüssel 35, 15 und 25 auf.

Den Identifikationsschlüsseln 35, 5, 15 und 25 sind wiederum Kennschlüssel 36, 6, 16, 26 zugeordnet und in der Speichereinrichtung 2 abgelegt.

Bei einer Kalibrierung der beteiligten Komponenten 2, 3 und 4 sowie gegebenenfalls 14 und 24 werden die Kennschlüssel der jeweiligen aktuell vorhandenen und angeschlossenen bzw. verbundenen Komponenten zusammen mit den Kalibrierungsdaten in der Speichereinrichtung 2 abgelegt. Eine Eichung oder Festschreibung der Kalibrierungsdaten erfolgt nach Betätigung des Schalters 17. Dabei wird ein gegebenenfalls vorhandenes Siegel 18 oder dergleichen zerstört und insbesondere elektronisch der Status auf "nicht geeicht" gesetzt. Zur Aktivierung der Eichung kann es erforderlich sein, dass eine Zugangskontrolle über einen Code oder dergleichen erfolgt. Es ist auch möglich, dass eine Kalibrierungskomponente mit der Vorrichtung 1 verbunden werden muss, damit die nötige Berechtigung sichergestellt wird.

Zur Eichung wird der Schalter 17 in den Kalibriermodus in Stellung 12 überführt. Anschließend werden die Kalibrierdaten 13 ermittelt und/oder abgespeichert. Außerdem werden die Kennschlüssel der aktuell angeschlossenen Wägeeinheit 4 und gegebenenfalls weiterer aktuell verbundener Komponenten ermittelt und in der Speichereinrichtung 2 abgelegt.

Ein Kennschlüssel einer Komponente kann identisch mit seinem Identifikationsschlüssel sein oder aber daraus abgeleitet sein oder Teil eines Schlüsselpaares sein. In jedem Fall ist der Kennschlüssel 6 der Wägeeinheit 4 charakteristisch für den zugehörigen Identifikationsschlüssel 5 und ermöglicht eine eindeutige Überprüfung, ob eine zur Zeit angeschlossene Wägeeinheit 4 der zum Kalibrierungszeitpunkt angeschlossenen Wägeeinheit entspricht.

In normalen Betrieb wird mit der Auswerteeinrichtung 3 aus den mit der Wägeeinheit 4 ermittelten Messdaten 7 ein Datensatz 8 abgeleitet, welcher Wägedaten 9 enthält. Die Auswerteeinrichtung 3 überprüft danach oder davor die Zusammengehörigkeit des in der Speichereinrichtung 2 hinterlegten Kennschlüssels 6 der Wägeeinheit 4 und des Identifikationsschlüssels 5 der aktuell angeschlossenen Wägeeinheit 4. Der Datensatz 8 erhält einen positiven Prüfstatus 10, wenn der Kennschlüssel 6 zu dem Identifikationsschlüssel 5 gehört, die Komponente also nicht getauscht wurde.

Der Datensatz 8 erhält einen negativen Prüfstatus 11, wenn der zu dem Identifikationsschlüssel 5 der Wägeeinheit 4 kein passender Kennschlüssel 6 in der Speichereinrichtung 2 ermittelt wird, was bedeutet, dass nun eine andere Wägeeinheit angeschlossen ist, die zum Zeitpunkt der letzten Kalibrierung nicht vorhanden war oder nicht berücksichtigt wurde. Schließlich wird der Datensatz 8 ausgegeben, auch wenn die Überprüfung nicht erfolgreich war, weil z. B. eine andere Wägeeinheit eingesetzt wird. Bei erfolgreicher Überprüfung und somit positivem Prüfstatus 10 wird der Datensatz 8 als kalibrierter Datensatz ausgegeben und andernfalls als nicht-kalibrierter Datensatz bei negativem Prüfstatus 11.

Falls mehrere der Komponenten mit Identifikationsschlüsseln versehen sind, werden wenigstens alle am Wägevorgang beteiligten Komponenten auf Übereinstimmung überprüft. Ein positiver Prüfstatus 10 wird nur dann ausgegeben, wenn alle Überprüfungen erfolgreich waren.

Die Überprüfung der Wägeeinheit 4 oder aller beteiligter Komponenten kann bei jedem Start der Vorrichtung und/oder bei jedem Wägevorgang erfolgen. Ein Füllvorgang z. B. wird nur dann insgesamt mit einem positiven Prüfstatus 10 versehen, wenn kein einziger Wägevorgang während des Füllvorgangs einen negativen Prüfstatus 11 ergeben hat.

Bei einer Kalibrierung werden die Kalibrierungsdaten und Kennschlüssel der aktuell verbundenen Komponenten in einem nicht-flüchtigen Teil der Speichereinrichtung 2 abgelegt. Wenigstens bei einer Eichung werden die Kalibrierungsdaten und Kennschlüssel nur lesbar gespeichert. Gegebenenfalls ist gar kein direkter Zugriff möglich, sondern nur ein Zugriff über Prüfroutinen, mit denen dann eine Auswertung oder ein Vergleich der Kennschlüssel erfolgt.

In bestimmten Ausführungen wird ein Datensatz 8 mit einem Kennschlüssel 6 signiert, falls ein positiver Prüfstatus 10 ermittelt wird.

Auch vor einer Darstellung auf einer Anzeigeeinrichtung 14 kann eine Überprüfung des Identifikationsschlüssels 15 mit dem in der Speichereinrichtung hinterlegten Kennschlüssel 16 der Anzeigeeinrichtung 14 erfolgen.

In analoger Weise kann das Steuerprogramm 24, welches den Ablauf steuert, sich selbst überprüfen und den Identifikationsschlüssel 25 mit dem in der Speichereinrichtung 2 abgelegten Kennschlüssel 26 vergleichen. Wird der Vergleich auch anhand von Prüfzahlen und dergleichen durchgeführt, können Änderungen an dem Steuerprogramm 24 zuverlässig aufgedeckt werden.

Ein Zeitgeber 23 ist hier vorgesehen, der aktiviert wird, wenn ein negativer Prüfstatus 11 ermittelt wird. Nach Ablauf der Zeitspanne 20 kann ein Stopp der Vorrichtung erfolgen. Gegebenenfalls wird durch Quittierung eines Hinweises oder durch Eingabe eines Codes der Wartungsmodus verlängerbar, in die Vorrichtung versetzt wird, wenn auch nur ein negativer Prüfstatus 11 ermittelt wird, nachdem z. B. eine Komponente für Testzwecke ausgetauscht wurde. Nach Rücktausch der Komponente kann der Normalbetrieb wieder aufgenommen werden, ohne eine erneute Eichung durchführen zu müssen.

Insgesamt bietet die Erfindung viele Vorteile, da ein einfacher Betrieb und eine einfache Wartung möglich sind, selbst wenn Komponenten für Testzwecke getauscht werden, die Teil eines geeichten Systems sind.

**Bezugszeichenliste:**

| | | | |
|---|---|---|---|
| 1 | Vorrichtung | 20 | Zeitraum |
| 2 | Speichereinrichtung | 21 | Kalibrierkomponente |
| 3 | Auswerteeinrichtung | 22 | Kennschlüssel |
| 4 | Wägeeinheit | 23 | Zeitgeber |
| 5 | Identifikationsschlüssel | 24 | Steuerprogramm |
| 6 | Kennschlüssel | 25 | Identifikationsschlüssel |
| 7 | Messdaten | 26 | Kennschlüssel |
| 8 | Datensatz | 35 | Identifikationsschlüssel |
| 9 | Wägedaten | 36 | Kennschlüssel |
| 10 | positiver Prüfstatus | 39 | Steuerbefehl |
| 11 | negativen Prüfstatus | 100 | Füllmaschine |
| 12 | Kalibriermodus | 101 | Winkelposition |
| 13 | Kalibrierdaten | 102 | Behälter |
| 14 | Anzeigeeinrichtung | 103 | Füllorgan |
| 15 | Identifikationsschlüssel | 104 | Austrageband |
| 16 | Kennschlüssel | 105 | Steuereinrichtung |
| 17 | Schalter | 108 | Aufsteckvorrichtung |
| 18 | Siegel | 109 | Winkelsensor |
| 19 | Hinweissignal | | |

## Patentansprüche

1. Verfahren zum Betreiben einer Füllmaschine (100) mit wenigstens einer Speichereinrichtung (2), einer Auswerteeinrichtung (3) und einer Wägeeinheit (4),
wobei die Wägeeinheit (4) einen eindeutigen Identifikationsschlüssel (5) aufweist,
und wobei für den Identifikationsschlüssel (5) der Wägeeinheit (4) ein zugehöriger charakteristischer Kennschlüssel (6) in der Speichereinrichtung (2) hinterlegt ist,
wobei die Auswerteeinrichtung (3) aus den mit der Wägeeinheit (4) ermittelten Messdaten (7) einen Datensatz (8) ableitet, welcher Wägedaten (9) enthält,
wobei die Auswerteeinrichtung (3) die Zusammengehörigkeit des in der Speichereinrichtung hinterlegten Kennschlüssels (6) der Wägeeinheit (4) und des Identifikationsschlüssels (5) der aktuellen Wägeeinheit (4) feststellt und einen positiven Prüfstatus (10) ermittelt, wenn die Zusammengehörigkeit des in der Speichereinrichtung hinterlegten Kennschlüssels (6) und des Identifikationsschlüssels (5) der aktuellen Wägeeinheit (4) festgestellt wird,
und einen negativen Prüfstatus (11) ermittelt, wenn zu dem Identifikationsschlüssel (5) der aktuellen Wägeeinheit (4) kein passender in der Speichereinrichtung hinterlegter Kennschlüssel (6) in der Speichereinrichtung (2) festgestellt wird,
**dadurch gekennzeichnet,**
**dass** der Datensatz (8) als kalibrierter Datensatz bei positivem (10) und als nicht-kalibrierter Datensatz bei negativem Prüfstatus (11) ausgegeben wird, und dass mit den ausgegebenen Wägedaten die Füllmaschine gesteuert wird, und dass nach erstmaligem Erkennen eines negativen Prüfstatus (11) die Steuerung nur für einen vorbestimmten Zeitraum (20) fortgesetzt wird.

2. Verfahren nach dem Anspruch 1, wobei ein Kalibriermodus (12) und insbesondere ein Eichmodus vorgesehen ist, nach dessen Aktivierung der charakteristische Kennschlüssel (6) der aktuellen Wägeeinheit (4) zusammen mit Kalibrierungsdaten (13) in der Speichereinrichtung (2) nicht-flüchtig gespeichert werden.

3. Verfahren nach Anspruch 2, wobei der Kalibriermodus (12) durch einen Schalter (17) aktiviert wird, der nach der Kalibrierung mit einer Schutzeinrichtung (18) versehen wird, sodass eine erneute Kalibrierung nur nach Verletzung der Schutzeinrichtung (15) möglich ist.

4. Verfahren nach einem der vorhergehenden Ansprüche, wobei eine Kalibrierung nur nach Authentifizierung durchgeführt werden kann.

5. Verfahren nach einem der vorhergehenden Ansprüche, wobei der Datensatz (8) mit dem Kennschlüssel (6) signiert wird, falls ein positiver Prüfstatus (10) ermittelt wird.

6. Verfahren nach einem der vorhergehenden Ansprüche, wobei der Datensatz (8) zu einer als Anzeigeeinrichtung (14) ausgebildeten Komponente übermittelt, und der Datensatz (8) nur dann auf der Anzeigeeinrichtung (14) als kalibrierter Datensatz (8) ausgegeben wird, wenn ein in der Speichereinrichtung hinterlegter Kennschlüssel (16) der Anzeigeeinrichtung (14) zu einem Identifikationsschlüssel (15) der aktuellen Anzeigeeinrichtung (14) passt.

7. Verfahren nach einem der vorhergehenden Ansprüche, wobei ein Steuerprogramm (24) vorgesehen ist, welches wenigstens ein Teil des Verfahrensablaufs steuert und welches einen Identifikationsschlüssel (25) aufweist, wobei ein dem Identifikationsschlüssel (25) zugehöriger Kennschlüssel (26) bei der Kalibrierung in der Speichereinrichtung (2) abgelegt wird.

8. Verfahren nach einem der vorhergehenden Ansprüche, wobei ein Hinweissignal (19) ausgegeben wird, wenn ein negativer Prüfstatus (11) ermittelt wird, wobei insbesondere erst nach Bestätigung des Hinweissignals (17) die Steuerung fortgesetzt wird.

9. Verfahren nach einem der vorhergehenden Ansprüche, wobei mehrere Komponenten (4, 14, 24) vorgesehen sind, denen jeweils ein Identifikationsschlüssel (5, 15, 25) und/oder ein Kennschlüssel (6, 16, 26) zugeordnet sind.

10. Verfahren nach einem der vorhergehenden Ansprüche, wobei in dem Kalibriermodus (12) die Kennschlüssel (6) weiterer Komponenten in der Speichereinrichtung (2) abgelegt werden.

11. Verfahren nach einem der vorhergehenden Ansprüche, wobei der Identifikationsschlüssel (5) und der Kennschlüssel (6) identisch oder symmetrisch aufgebaut sind,
oder wobei der Identifikationsschlüssel (5) und der Kennschlüssel (6) asymmetrisch als öffentliche und private Schlüssel ausgeführt sind.

12. Füllmaschine (100) mit einer Auswerteeinrichtung (3) und einer Wägeeinheit (4) und wenigstens einer Speichereinrichtung (2),
wobei die Wägeeinheit (4) einen eindeutigen Identifikationsschlüssel (5) aufweist,
und wobei in der Speichereinrichtung (2) wenigstens ein Kennschlüssel (6) hinterlegt ist, welcher für den Identifikationsschlüssel (5) der Wägeeinheit (4) charakteristisch ist,
wobei die Auswerteeinrichtung (3) dazu ausgebildet und eingerichtet ist, bei einem Wägevorgang aus den mit der Wägeeinheit (4) ermittelten Messdaten (7) wenigstens einen Datensatz (8) abzuleiten, welcher Wägedaten (9) enthält, wobei die Auswerteeinrichtung (3) dazu ausgebildet und eingerichtet ist, die Zusammengehörigkeit des in der Speichereinrichtung hinterlegten Kennschlüssels (6) der Wägeeinheit (4) und des Identifikationsschlüssels (5) der aktuellen Wägeeinheit (4) zu überprüfen
und einen positiven Prüfstatus (10) zu ermitteln, wenn die Zusammengehörigkeit des in der Speichereinrichtung hinterlegten Kennschlüssels (6) und des Identifikationsschlüssels (5) der aktuellen Wägeeinheit (4) feststellbar ist,
und einen negativen Prüfstatus (11) zu ermitteln, wenn eine fehlende Zusammengehörigkeit des in der Speichereinrichtung hinterlegten Kennschlüssels (6) und des Identifikationsschlüssels (5) der aktuellen Wägeeinheit (4) feststellbar ist,
**dadurch gekennzeichnet,**
**dass** der Datensatz (8) als kalibrierter Datensatz bei positivem (10) und als nicht-kalibrierter Datensatz bei negativem Prüfstatus (11) ausgebbar ist, und dass mit den ausgegebenen Wägedaten die Füllmaschine steuerbar ist, und dass nach erstmaligem Erkennen eines negativen Prüfstatus (11) die Steuerung nur für einen vorbestimmten Zeitraum (20) fortsetzbar ist.

13. Vorrichtung nach Anspruch 12, wobei ein versiegelbarer Schalter (17) vorgesehen ist, mit welcher die Auswerteeinrichtung (3) in einen Kalibriermodus (12) und insbesondere einen Eichmodus überführbar ist.

14. Vorrichtung nach Anspruch 12 oder 13, wobei ein Füllorgan zur nacheinander erfolgenden Abfüllung von Produkten in Behälter vorgesehen ist, wobei eine kalibrierte Abfüllung bei positivem Prüfstatus erfolgt.

15. Füllmaschine (100) nach einem der Ansprüche 12, 13 oder 14 zur nacheinander erfolgenden kalibrierten Abfüllung von Produkten in Behälter (102) in einem Füllmodus, wobei wenigstens ein Füllorgan (103) zum Transport des abzufüllenden Produktes in den Behälter (102) und wenigstens eine Wägeeinheit (4) zum Abwiegen des Produktes und eine Auswerteeinrichtung (3) und ein in einer Speichereinrichtung (2) abgelegtes Programmpaket vorgesehen sind, wobei in dem Füllmodus eine kalibrierte Abfüllung vorgesehen ist,
**dadurch gekennzeichnet,**
**dass** wenigstens der Wägeeinheit (4), der Auswerteeinrichtung (3) und dem Programmpaket als Komponenten eindeutige Identifikationsschlüssel (5) zugeordnet sind, wobei zu den Identifikationsschlüsseln (5) korrespondierende Kennschlüssel (6) in der Speichereinrichtung (2) abgelegt sind, und wobei bei Start des Füllmodus die Identifikationsschlüssel (5) der aktuellen Wägeeinheit (4), der aktuellen Auswerteeinrichtung (3) und des aktuellen Programmpaketes abgefragt werden und jeweils überprüft wird, ob die in der Speichereinrichtung (2) abgelegten Kennschlüssel (6) mit den Identifikationsschlüsseln (5) der aktuellen Komponenten korrespondieren
und wobei bei einem positiven Prüfergebnis der Füllmodus fortgesetzt und bei einem negativen Prüfergebnis ein Wartungsmodus gestartet wird, in dem eine nicht-kalibrierte Abfüllung möglich ist.

## Claims

1. Method for operating a filling machine (100) comprising at least one memory device (2), one evaluation device (3) and one weighing unit (4), the weighing unit (4) including a unique identification key (5), and wherein a characteristic identification code (6) pertaining to the identification key (5) of the weighing unit (4) is lodged in the memory device (2), wherein the evaluation device (3) derives from the measurement data (7) obtained by the weighing unit (4) a data set (8) containing weighing data (9), wherein the evaluation device (3) verifies whether the identification code (6) of the weighing unit (4) lodged in the memory device pertains to the identification key (5) of the current weighing unit (4), and obtains a positive inspection status (10) if the identification code (6) lodged in the memory device is found to pertain to the identification key (5) of the current weighing unit (4), and obtains a negative inspection status (11) if no identification code (6) matching the identification key (5) of the current weighing unit (4) is found to be lodged in the memory device (2),
**characterized in that** the data set (8) is output as a calibrated data set in the case of a positive inspection status (10) and as a non-calibrated data set in the case of a negative inspection status (11), and that the filling machine is controlled by means of the output weighing data, and that upon first detecting a negative inspection status (11), controlling continues for a predetermined period (20) only.

2. The method according to claim 1, wherein a calibration mode (12) and in particular a standardization mode is provided, after the activation of which the characteristic identification code (6) of the current weighing unit (4) is stored non-volatile in the memory device (2) together with calibration data (13).

3. The method according to claim 2, wherein the calibration mode (12) is activated by a shifter (17) that is provided with a protective device (18) after calibration, so that calibration can only be repeated when damaging the protective device (15).

4. The method according to any of the preceding claims, wherein calibration can only be performed after authentication.

5. The method according to any of the preceding claims, wherein the data set (8) is signed with the identification code (6) if a positive inspection status (10) is obtained.

6. The method according to any of the preceding claims, wherein the data set (8) is transmitted to a component that is configured as a display device (14), and the data set (8) will only then be output on the display device (14) as a calibrated data set (8) if an identification code (16) of the display device (14) lodged in the memory device pertains to an identification key (15) of the current display device (14).

7. The method according to any of the preceding claims, wherein a control program (24) is provided that controls at least part of the process sequence and comprises an identification key (25), wherein an identification code (26) pertaining to the identification key (25) is stored in the memory device (2) during calibration.

8. The method according to any of the preceding claims, wherein an indication signal (19) is output if a negative inspection status (11) is obtained, wherein controlling in particular continues only after acknowledging the indication signal (17).

9. The method according to any of the preceding claims, wherein multiple components (4, 14, 24) are provided to which an identification key (5, 15, 25) and/or an identification code (6, 16, 26) is/are assigned.

10. The method according to any of the preceding claims, wherein in calibration mode (12) the identification codes (6) of further components are stored in the memory device (2).

11. The method according to any of the preceding claims, wherein the identification key (5) and the identification code (6) are identical or symmetric in structure, or wherein the identification key (5) and the identification code (6) are configured as asymmetric, public and private keys.

12. Filling machine (100) comprising an evaluation device (3) and a weighing unit (4) and at least one memory device (2), the weighing unit (4) including a unique identification key (5), and wherein at least one identification code (6) is lodged in the memory device (2) that is characteristic of the identification key (5) of the weighing unit (4), wherein the evaluation device (3) is configured and set up to derive during a weighing operation, from the measurement data (7) obtained with the weighing unit (4), at least one data set (8) containing weighing data (9), wherein the evaluation device (3) is configured and set up to verify whether the identification code (6) of the weighing unit (4) lodged in the memory device pertains to the identification key (5) of the current weighing unit (4), and to obtain a positive inspection status (10) if the identification code (6) lodged in the memory device is found to pertain to the identification key (5) of the current weighing unit (4), and to obtain a negative inspection status (11) if the identification code (6) lodged in the memory device is found to not pertain to the identification key (5) of the current weighing unit (4), **characterized in that** the data set (8) can be output as a calibrated data set in the case of a positive inspection status (10) and as a non-calibrated data set in the case of a negative inspection status (11), and that the filling machine can be controlled by the output weighing data, and that upon first detecting a negative inspection status (11), controlling can be continued for a predetermined period (20) only.

13. The apparatus according to claim 12, wherein a sealable shifter (17) is provided by means of which the evaluation device (3) can be transferred to calibration mode (12) and in particular to standardization mode.

14. The apparatus according to claim 12 or 13, wherein a filling element is provided for sequentially filling product into containers, wherein calibrated filling is performed if the inspection status is positive.

15. Filling machine (100) according to any of the claims 12, 13 or 14 for sequential and calibrated filling of product into containers (102) in a filling mode, wherein at least one filling element (103) is provided for transporting the product to be filled into the container (102) and at least one weighing unit (4) is provided for weighing the product, and an evaluation device (3) and a software package stored in a memory device (2) are provided, wherein calibrated filling is provided in filling mode,
**characterized in that** unique identification keys (5) are assigned at least to the components: weighing unit (4), evaluation device (3), and software package, wherein identification codes (6) corresponding to the identification keys (5) are stored in the memory device (2), and wherein as filling mode starts, the identification keys (5) of the current weighing unit (4), the current evaluation device (3) and the current software package are inquired, including verifying whether the identification codes (6) stored in the memory device (2) correspond to the identification keys (5) of the current components, and wherein, in the case of a positive test result, the filling mode continues and in the case of a negative test result, maintenance mode starts which allows non-calibrated filling.

## Revendications

1. Procédé d'exploitation d'une machine de remplissage (100), doté d'au moins un moyen d'enregistrement (2), un moyen d'évaluation (3) et une unité de pesage (4),
dans lequel ladite unité de pesage (4) présente un code d'identification (5) unique,
et dans lequel pour ledit code d'identification (5) de l'unité de pesage (4), un mot de passe caractéristique correspondant (6) est consigné dans le moyen d'enregistrement (2),
dans lequel ledit moyen d'évaluation (3) dérive un lot de données (8) à partir des données de mesure (7) déterminées par l'unité de pesage (4), lequel lot de données contient des données de pesage (9),
dans lequel ledit moyen d'évaluation (3) constate que le mot de passe (6) de l'unité de pesage (4), lequel est consigné dans le moyen d'enregistrement, correspond bien au code d'identification (5) de l'unité de pesage (4) actuelle et détermine un état de contrôle positif (10), lorsqu'il est constaté que le mot de passe (6) consigné dans le moyen d'enregistrement et le code d'identification (5) de l'unité de pesage actuelle (4) sont bien correspondants,
et détermine un état de contrôle négatif (11), lorsqu'il n'est constaté dans le moyen d'enregistrement (2) aucun mot de passe (6), consigné dans le moyen d'enregistrement, allant avec le code d'identification (5) de l'unité de pesage actuelle (4), **caractérisé en ce**
**que** pour un état de contrôle positif (10), le lot de données (8) est émis en tant que lot de données étalonné, et en tant que lot de données non étalonné pour un état de contrôle négatif (11), et que les données de pesage émises permettent de commander la machine de remplissage, et que, après une première détection d'un état de contrôle négatif (11), la commande n'est poursuivie que sur un laps de temps (20) prédéterminé.

2. Procédé selon la revendication 1, dans lequel est prévu un mode d'étalonnage (12), et notamment un mode de tarage, après l'activation duquel le mot de passe (6) caractéristique de l'unité de pesage (4) actuelle est enregistré de manière non volatile dans le moyen d'enregistrement (2) avec des données d'étalonnage (13).

3. Procédé selon la revendication 2, dans lequel le mode d'étalonnage (12) est activé par un commutateur (17) pourvu après l'étalonnage d'un moyen de protection (18), de sorte qu'il n'est possible de procéder à un nouvel étalonnage que sur effraction dudit moyen de protection (15).

4. Procédé selon l'une quelconque des revendications précédentes, dans lequel un étalonnage ne peut être réalisé que sur authentification.

5. Procédé selon l'une quelconque des revendications précédentes, dans lequel le lot de données (8) est signé avec le mot de passe (6), au cas où est déterminé un état de contrôle positif (10).

6. Procédé selon l'une quelconque des revendications précédentes, dans lequel le lot de données (8) est transmis à une composante conçue en tant que moyen d'affichage (14), et le lot de données (8) n'est émis, en tant que lot de données (8) étalonné, sur ledit moyen d'affichage (14) que si un mot de passe (16) du moyen d'affichage (14), consigné dans le moyen d'enregistrement, va bien avec un code d'identification (15) dudit moyen d'affichage (14) actuel.

7. Procédé selon l'une quelconque des revendications précédentes, dans lequel est prévu un programme de commande (24) qui commande au moins une partie du déroulement du procédé et qui présente un code d'identification (25), dans lequel un mot de passe (26) correspondant audit code d'identification (25) est consigné dans le moyen d'enregistrement (2) au cours de l'étalonnage.

8. Procédé selon l'une quelconque des revendications précédentes, dans lequel un signal d'avertissement (19) est émis lorsqu'un état de contrôle négatif (11) est déterminé, dans lequel notamment la commande n'est poursuivie qu'après désactivation du signal d'avertissement (17).

9. Procédé selon l'une quelconque des revendications précédentes, dans lequel sont prévues plusieurs composantes (4, 14, 24) auxquelles sont associés respectivement un code d'identification (5, 15, 25) et/ou un mot de passe (6, 16, 26) .

10. Procédé selon l'une quelconque des revendications précédentes, dans lequel en mode d'étalonnage (12), les mots de passe (6) d'autres composantes sont déposés dans le moyen d'enregistrement (2).

11. Procédé selon l'une quelconque des revendications précédentes, dans lequel le code d'identification (5) et le mot de passe (6) sont formés de manière identique ou symétrique,
ou dans lequel le code d'identification (5) et le mot de passe (6) sont réalisés de manière asymétrique en tant que codes public et privé.

12. Machine de remplissage (100) dotée d'un moyen d'évaluation (3) et d'une unité de pesage (4) et d'au moins un moyen d'enregistrement (2),
dans laquelle ladite unité de pesage (4) présente un code d'identification (5) unique,
et dans laquelle est consigné dans le moyen d'enregistrement (2) au moins un mot de passe (6) qui est caractéristique du code d'identification (5) de l'unité de pesage (4),
dans laquelle le moyen d'évaluation (3) est conçu et mis au point pour, au cours d'une opération de pesage, dériver à partir des données de mesure (7) déterminées au moyen de l'unité de pesage (4) au moins un lot de données (8) contenant des données de pesage (9), dans laquelle le moyen d'évaluation (3) est conçu et mis au point pour vérifier que le mot de passe (6) de l'unité de pesage (4) consigné dans le moyen d'enregistrement correspond bien au code d'identification (5) de l'unité de pesage (4) actuelle
et pour déterminer un état de contrôle positif (10) lorsqu'il peut être constaté que le mot de passe (6) consigné dans le moyen d'enregistrement correspond bien au code d'identification (5) de l'unité de pesage (4) actuelle,
et pour établir un état de contrôle négatif (11) lorsqu'il peut être constaté que le mot de passe (6) consigné dans le moyen d'enregistrement ne correspond pas au code d'identification (5) de l'unité de pesage (4) actuelle, **caractérisée en ce**
**que** pour un état de contrôle positif (10), le lot de données (8) peut être émis en tant que lot de données étalonné, et en tant que lot de données non étalonné pour un état de contrôle négatif (11), et que les données de pesage émises permettent de commander la machine de remplissage, et que, après une première détection d'un état de contrôle négatif (11), la commande n'est poursuivie que sur un laps de temps (20) prédéterminé.

13. Dispositif selon la revendication 12, un commutateur (17) qui peut être scellé étant prévu, au moyen duquel il est possible de faire passer le moyen d'évaluation (3) dans un mode d'étalonnage (12) et notamment un mode de tarage.

14. Dispositif selon la revendication 12 ou 13, dans lequel est prévu un organe de remplissage destiné à verser les uns après les autres des produits dans des récipients, dans lequel un versement étalonné a lieu lorsque l'état de contrôle est positif.

15. Machine de remplissage (100) selon l'une des revendications 12, 13 ou 14, destinée au versement étalonné et consécutif de produits dans des récipients (102) dans un mode de remplissage, dans laquelle sont prévus au moins un organe de remplissage (103) destiné au transport du produit à verser dans le récipient (102), et au moins une unité de pesage (4) destinée à peser le produit, et un moyen d'évaluation (3) et un set de programme déposé dans un moyen d'enregistrement (2), dans laquelle est prévu, en mode de remplissage, un versement étalonné,
**caractérisée en ce**
**que** des codes d'identification (5) uniques sont associés au moins à l'unité de pesage (4), au moyen d'évaluation (3) et au set de programme en tant que composantes, dans laquelle des mots de passe (6) correspondants aux codes d'identification (5) sont déposés dans le moyen d'enregistrement (2), et dans laquelle au démarrage du mode de remplissage, les codes d'identification (5) de l'unité de pesage (4) actuelle, du moyen d'évaluation (3) actuel et du set de programme actuel sont demandés et qu'il est respectivement vérifié si les mots de passe (6) déposés dans le moyen d'enregistrement (2) correspondent bien aux codes d'identification (5) des composantes actuelles
et dans laquelle en cas de résultat de contrôle positif, le mode de remplissage est poursuivi, et en cas de résultat de contrôle négatif, un mode de maintenance est démarré, dans lequel il est possible de procéder à un versement non étalonné.
